# EUROPÄISCHE PATENTSCHRIFT

(11) **EP 2 853 146 B1**
(45) Veröffentlichungstag und Bekanntmachung des Hinweises auf die Patenterteilung: **01.03.2017**
(21) Anmeldenummer: 14176983.6
(22) Anmeldetag: 15.07.2014
(51) Int. Cl.: A01D 43/10

(54) **Selbstfahrender Feldhäcksler mit einer Konditioniereinrichtung**
Self-propelled chaff cutter with a conditioning device
Ramasseuse-hacheuse automotrice dotée d'un dispositif de conditionnement

(30) Priorität: 26.09.2013 DE 102013110636
(43) Veröffentlichungstag der Anmeldung: 01.04.2015
(73) Patentinhaber: CLAAS Selbstfahrende Erntemaschinen GmbH, 33428 Harsewinkel (DE)
(72) Erfinder: Laumeier, Ludger, 33397 Rietberg (DE); Albinger, Bernd, 33378 Rheda-Wiedenbrück (DE); Dieckmeyer, Sascha, 49214 Bad Rothenfelde (DE)

(56) Entgegenhaltungen:
- EP-A1- 1 563 724
- WO-A1-2012/010396

## Beschreibung

Die vorliegende Erfindung betrifft einen selbstfahrenden Feldhäcksler mit einer Konditioniereinrichtung gemäß dem Oberbegriff des Anspruches 1.

Konditioniereinrichtungen werden in der landwirtschaftlichen Erntetechnik, insbesondere an selbstfahrenden Feldhäckslern verwendet, um im aufgenommenen Erntegut enthaltene Körner zum Zweck der besseren Verdaubarkeit bei der anschließenden Verfütterung an Tiere aufzuschließen.

Bei selbstfahrenden Feldhäckslern sind solche Konditioniereinrichtungen einem Häckselaggregat in Förderrichtung des Erntegutes nachgelagert angeordnet. In die Konditioniereinrichtung tritt demnach bereits gehäckseltes Erntegut ein, um nach dortiger Bearbeitung unterstützt von einem nachgelagerten Auswurfbeschleuniger durch eine Überladeeinrichtung in einen Ladebehälter ausgeworfen zu werden.

Zur Erfüllung der genannten Funktion des Aufschließens im Erntegut enthaltener Körner umfassen gängige Konditioniereinrichtungen zwei mit einer zur Erntegutbearbeitung geeigneten Profilierung versehene Walzen. Diese sind jeweils gegenüber einem Gehäuse der Konditioniereinrichtung um deren Längsachse drehbar gelagert und werden durch einen an der Erntemaschine vorhandenen Riementrieb angetrieben. Aufgrund ihrer achsparallelen und definiert beabstandeten Anordnung begrenzen die beiden Walzen einen Spalt, den das zu bearbeitende Erntegut in Erntegutstromrichtung durchläuft und dabei zwischen den profilierten Walzen bearbeitet wird. Zweckmäßigerweise drehen die Walzen dazu gegenläufig und werden zur Erhöhung der Reibwirkung zwischen den Walzen mit unterschiedlich hoher Drehzahl angetrieben, was einen Schereffekt hervorruft. Die unterschiedlichen Drehzahlen werden durch den Einsatz von Riemenscheiben mit unterschiedlichen Durchmessern realisiert. Eine Änderung der Differenzdrehzahl geht dabei mit dem Wechsel der die Walzen antreibenden Riemenscheiben einher. Dieser Wechsel ist auf Grund des dafür notwendigen Ausbaus der Konditioniereinrichtung aufwendig und zeitintensiv. Zudem sind durch den Wechsel der Riemenscheiben nur diskrete Differenzdrehzahlen darstellbar.

Aus der WO 2012/010396 A1 ist ein selbstfahrender Feldhäcksler der eingangs genannten Art bekannt. Hierin ist eine Konditioniereinrichtung beschrieben, die eine angetriebene erste Walze aufweist, die trieblich mit einer zweiten Walze durch einen Riemen verbunden ist. Eine Drehzahldifferenz zwischen der ersten Walze und der zweiten Walze wird durch an deren Antriebswellen angeordneten Riemenschieben erreicht, die unterschiedliche Außendurchmesser aufweisen.

Der Erfindung liegt somit die Aufgabe zu Grunde, einen Feldhäcksler derart weiterzubilden, dass eine Verstellung der Differenzdrehzahl der Konditioniereinrichtung einfacher durchführbar ist.

Diese Aufgabe wird erfindungsgemäß durch die kennzeichnenden Merkmale des Anspruches 1 gelöst.

Vorteilhafte Weiterbildungen der Erfindung sind Gegenstand der Unteransprüche.

Gemäß dem Anspruch 1 wird vorgeschlagen, dass die Antriebsdrehzahl der zweiten Walze durch einen mit der zweiten Walze trieblich verbundenen zusätzlichen Antrieb überlagerbar ist. Durch das Zuschalten des zusätzlichen Antriebs lässt sich die Differenzdrehzahl zwischen der ersten Walze und der zweiten Walze ohne Riemenscheibenwechsel verändern. Die Überlagerung der Antriebsdrehzahl, mit der die zweite Walze von dem Riementrieb angetrieben wird, kann dabei, im Gegensatz zu dem aus dem Stand der Technik bekannten Riemenantrieb, im laufenden Betrieb erfolgen. Dies gestattet eine höhere Flexibilität bei der Nachbehandlung von Erntegut durch die Konditioniereinrichtung.

Hierzu kann der Antrieb als hydrostatischer Antrieb ausgebildet sein. Der hydrostatische Antrieb kann als in die zweite Walze integrierter Hydromotor ausgeführt sein. Der als Hydromotor ausgeführte hydrostatische Antrieb kann alternativ an eine Welle der zweiten Walze angeflanscht sein. Der Antrieb des Hydromotors kann durch eine Anbindung an den Hydraulikkreislauf des Feldhäckslers erreicht werden.

Gemäß einer alternativen Weiterbildung kann der Antrieb als Elektromotor ausgebildet sein, der von einer als Generator arbeitenden, an dem Feldhäcksler angeordneten elektrischen Maschine speisbar ist. Gegenüber einem rein elektrischen Antrieb der Konditioniereinrichtung weist diese Lösung den Vorteil des geringeren Gewichts, der geringerer Kosten sowie einer höheren Funktionssicherheit auf.

In bevorzugter Weiterbildung kann der Elektromotor im Inneren der zweiten Walze angeordnet sein. Die Anordnung des Elektromotors im Inneren der zweiten Walze ist besonders platzsparend. Eine Anordnung unmittelbar benachbart zu der zweiten Walze kann alternativ vorgesehen werden.

Des Weiteren kann die elektrische Maschine, welche als Generator betreibbar ist, im Inneren der ersten Walze angeordnet sein. Auch hier steht die platzsparende Anordnung im Vordergrund. Zudem kann durch die räumliche Nähe zueinander der Verkabelungsaufwand von elektrischer Maschine und Elektromotor gering gehalten werden.

Alternativ kann die elektrische Maschine im Antriebsstrang des Feldhäckslers angeordnet sein.

Vorzugsweise kann ein Wechselrichter zur Ansteuerung des Elektromotors vorgesehen sein. Die Ansteuerung durch den Wechselrichter erlaubt eine stufenlose Variation der Drehzahl, mit welcher der Antrieb der zweiten Walze überlagert wird. Die Differenzdrehzahl lässt sich somit exakter an die jeweiligen Erntebedingungen anpassen.

Insbesondere kann der Elektromotor durch ein leistungsverzweigtes Getriebe mit einer trieblichen Anbindung der zweiten Walze verbunden sein. Der Vorteil dieser Anbindung besteht darin, dass die Hauptantriebsleistung der zweiten Walze durch den Riementrieb bereitgestellt wird. Lediglich die Differenzleistung ist in Abhängigkeit von der Differenzdrehzahl durch den Elektromotor bereitzustellen. Dies ist von Vorteil bei der Dimensionierung des Elektromotors und der als Generator dienenden elektrischen Maschine. Zudem kann hierdurch die vorgeschlagene Anordnung im Inneren der jeweiligen Walze vereinfacht werden, da der Leistungsbedarf eines Elektromotors ein maßgebliches Kriterium hinsichtlich der räumlichen Abmessungen ist.

Dabei kann die triebliche Anbindung der zweiten Walze eine auf einer drehbar in der zweiten Walze gelagerten Welle angeordnete Riemenscheibe umfassen. Vorteilhafterweise kann das leistungsverzweigte Getriebe als Planetengetriebe ausgeführt sein, welches im Inneren der zweiten Walze angeordnet ist. Hierdurch wird eine kompakte Bauweise erzielt.

Hierbei kann das Planetengetriebe ein Hohlrad umfassen, welches Teil eines Walzenmantels der zweiten Walze ist.

Weiterhin kann das Planetengetriebe einen Planetenträger umfassen, der auf einer von dem Riementrieb angetriebenen Welle der zweiten Walze angeordnet ist.

Insbesondere kann das Planetengetriebe ein Sonnenrad umfassen, welches auf einer Abtriebswelle des Elektromotors angeordnet ist.

Vorzugsweise kann eine Steuerungseinrichtung am Feldhäcksler angeordnet sein, mittels der der Wechselrichter ansteuerbar ist. Der Wechselrichter steht hierzu über eine Signal- und Steuerleitung mit der Steuereinrichtung in Wirkverbindung. Die Steuereinrichtung kann über diese Leitung anhand der von dem Wechselrichter zur Verfügung gestellten Signale die aktuelle Drehzahldifferenz ermitteln und auf einer Anzeigevorrichtung anzeigen. Eine Änderung der Drehzahldifferenz kann von einer Bedienperson durch eine entsprechende Eingabe in die Steuerungseinrichtung erreicht werden.

Bevorzugt kann der Wechselrichter in Abhängigkeit von zumindest einem Erntegutparameter ansteuerbar sein. Gemäß dieser Weiterbildung wird die Drehzahldifferenz anhand zumindest eines Erntegutparameters variiert. Die Variation der Drehzahldifferenz kann dabei automatisch durchführbar sein.

Die vorliegende Erfindung wird nachstehend anhand eines in den Zeichnungen dargestellten Ausführungsbeispieles näher erläutert.

Es zeigen:
Fig. 1 einen Feldhäcksler mit nach hinten geschwenkter Überladeeinrichtung in schematischer Seitenansicht;
Fig. 2 eine schematische Ansicht einer Konditioniereinrichtung;
Fig. 3 eine Längsschnittansicht einer Walze der Konditioniereinrichtung gemäß Fig. 2;
Fig. 4 eine schematische Ansicht einer Anordnung zum Antrieb der der Konditioniereinrichtung gemäß Fig.2

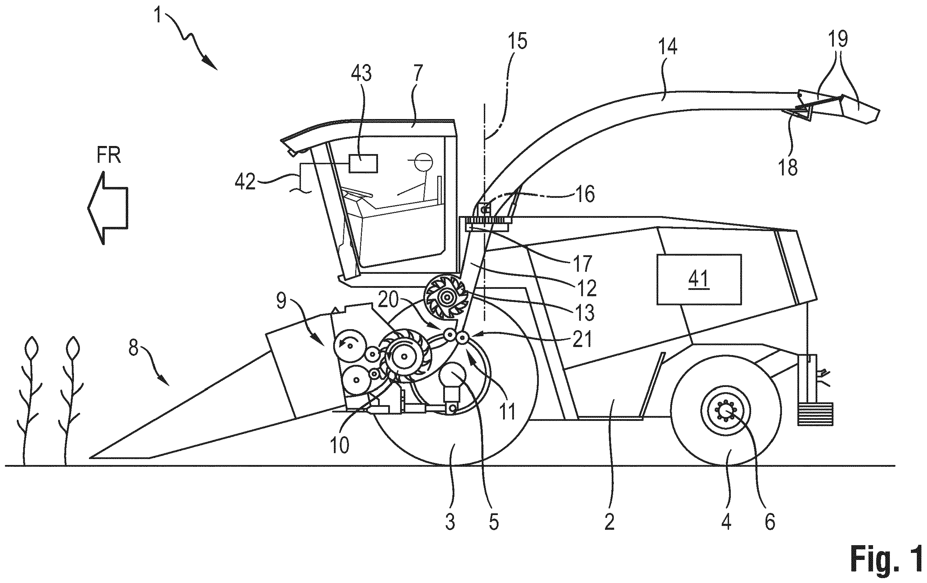

Fig. 1 zeigt einen selbstfahrenden Feldhäcksler 1 in schematischer Seitenansicht mit teilweiser Schnittdarstellung. Der Feldhäcksler 1 ist auf einen Maschinenrahmen 2 aufgebaut, der von angetriebenen vorderen Rädern 3 einer Vorderachse 5 und lenkbaren hinteren Rädern 4 einer Hinterachse 6 getragen wird. Die Bedienung des Feldhäckslers 1 erfolgt von einer oberhalb der Vorderachse 5 angeordneten Fahrerkabine 7.

Frontseitig, in Fahrtrichtung FR gesehen, ist dem Feldhäcksler 1 ein Erntevorsatzgerät 8 zugeordnet, beispielsweise ein Maisgebiss, welches im Arbeitsbetrieb Erntegut aufnimmt, gegebenenfalls zerkleinert und dem nachfolgenden Einzugsorgan 9 (umfassend Einzugs- und Vorpresswalzen) zuführt. Das Einzugsorgan 9 leitet das Erntegut einer nachgeordneten, rotierenden Häckseltrommel 10 zu, deren umlaufende Häckselmesser das Erntegut in Zusammenwirkung mit einer Gegenschneide zerkleinern. Das zerkleinerte Erntegut wird sodann an eine Konditioniereinrichtung 11 (auch Korncracker genannt) gefördert, der Erntegutkörner, beispielsweise Mais, anschlägt und über einen Förderschacht 12 an einen Nachbeschleuniger 13 übergibt. Der Nachbeschleuniger 13 beschleunigt das zerkleinerte Erntegut wirft es über eine als Auswurfkrümmer 14 ausgeführte Überladeeinrichtung auf ein hier nicht dargestelltes Transportfahrzeug.

Der Auswurfkrümmer 14 ist um eine vertikale Achse 15 schwenkbar. Der Antrieb erfolgt mittels eines am Fuß des Auswurfkrümmers 14 angeordneten Drehkranzes 27, in den ein nicht gezeigter Schneckentrieb eingreift. Die Schwenkbarkeit ermöglicht ein wahlweise seitliches Überladen auf ein neben dem Feldhäcksler 1 fahrendes Transportfahrzeug oder ein Überladen auf ein hinter dem Feldhäcksler 1 fahrendes Transportfahrzeug.

Zur Veränderung der Höhenstellung ist der Auswurfkrümmer 14 daneben um eine horizontale Achse 16 verschwenkbar. Mittels eines Hydraulikzylinders 20, der zwischen einem Befestigungssockel 17 und einem Lagerpunkt des Auswurfkrümmers 14 angeordnet ist, lässt sich die Höhenverstellung durchführen. Der Feldhäcksler 1 umfasst einen heckseitig am Fahrzeugrahmen angeordneten Verbrennungsmotor 41, der dem mechanischen Antrieb, beispielsweise durch Riementriebe, von Arbeitsaggregaten des Feldhäckslers 1 wie dem Erntevorsatzgerät 8, Einzugsorgan 9, der Häckseltrommel 10, der Konditioniereinrichtung 11 oder dem Nachbeschleuniger 13 dient.

Am auswurfseitigen Ende des Auswurfkrümmers 14 befindet sich eine über einen weiteren Hydraulikzylinder 18 verstellbare mehrteilige Auswurfklappe 19. Durch Verstellung der Auswurfklappe 19 kann die Wurfweite, das heißt der Abstand zwischen dem Feldhäcksler 1 und einem Auftreffpunkt des Gutstroms auf das Transportfahrzeug, beeinflusst werden. Wird die Auswurfklappe 19 nach unten geschwenkt, so ist die Wurfweite bei gleichbleibender Höheneinstellung des Auswurfkrümmers 14 geringer als bei einer nach oben geschwenkten Auswurfklappe 19.

Beim Überladen von Erntegut vom Feldhäcksler 1 auf ein mitfahrendes Transportfahrzeug bewegt sich der Feldhäcksler 1 in Fahrtrichtung FR vorwärts über das Feld. Je nach Art des Überladens ist der Auswurfkrümmer 14 bezogen auf die vertikale Achse 15 derart ausgerichtet, dass dieser etwa quer zur Fahrtrichtung FR (seitliches Überladen) oder, wie in Fig. 1 dargestellt, nach hinten (Überladen auf ein hinter dem Feldhäcksler fahrendes Transportfahrzeug) weist.

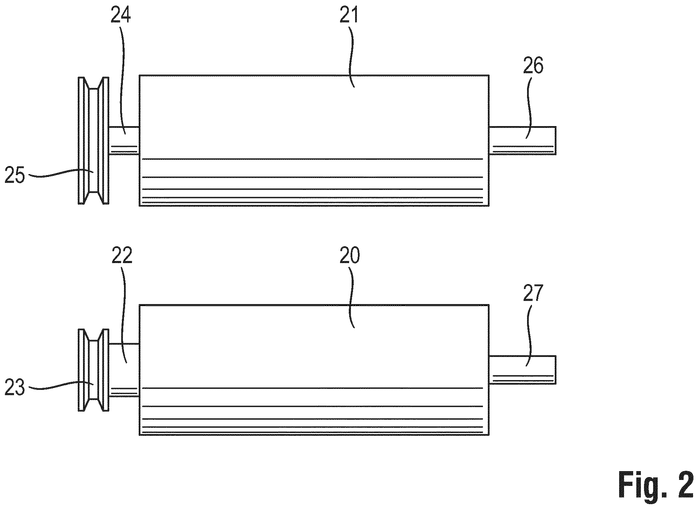

Die Darstellung in Fig. 2 zeigt eine perspektivische Ansicht der Konditioniereinrichtung 11. Die Konditioniereinrichtung 1 umfasst im Wesentlichen ein Walzenpaar, bestehend aus einer ersten Walze 20 und einer zweiten Walze 21, die jeweils gegenüber einem nicht dargestellten Gehäuse um deren Längsachse drehbar gelagert sind. Zum Antrieb der Walzen 20, 21 dienen Riemenscheiben 23, 25. Die Riemenscheibe 23 steht über eine Welle 22 mit der ersten Walze 20, die Riemenscheibe 25 über eine Welle 24 mit der zweiten Walze 21 in Antriebsverbindung. Beide Riemenscheiben 23, 25 werden von einem gemeinsamen Antriebsriemen (nicht dargestellt) umschlungen, der diese antreibt. Die erste Walze 20 und die zweite Walze 21 sind parallel zueinander und derart beabstandet voneinander angeordnet, dass diese einen im Betrieb der Konditioniereinrichtung 11 von Erntegut durchlaufenen Spalt begrenzen. Zur Förderung des Ernteguts in eine Gutstromrichtung sind die erste und die zweite Walze 20, 21 gegenläufig angetrieben, wobei auf Grund einer profilierten Oberflächen der Walzen 20, 21 sowie eines Drehzahlunterschiedes der Wellen 22, 24 das Erntegut zwischen der ersten Walze 20 und der zweiten Walze 21 bearbeitet (gerieben, gequetscht, zerfasert) wird, um darin enthaltene Körner aufzuschließen. Der Drehzahlunterschied der ersten Walze 20 und der zweiten Walze 21 resultiert aus unterschiedlichen Durchmessern der jeweiligen Riemenscheibe 23 und 25, mit denen die erste und die zweite Walze 20, 21 angetrieben werden. So weist die Riemenscheibe 25 der zweiten Walze 21 einen größeren Durchmesser auf, als die Riemenscheibe 23 der Walze 20. Entsprechend dreht sich die erste Walze 20 schneller als die zweite Walze 21. Die erste Walze 20 und die zweite Walze 21 weisen auf ihrer der jeweiligen Riemenscheibe 23, 25 gegenüberliegenden Seite eine Welle 26, 27 auf, welche der Lagerung der ersten und zweiten Walze 20, 21 in dem Gehäuse der Konditioniereinrichtung 11 dienen.

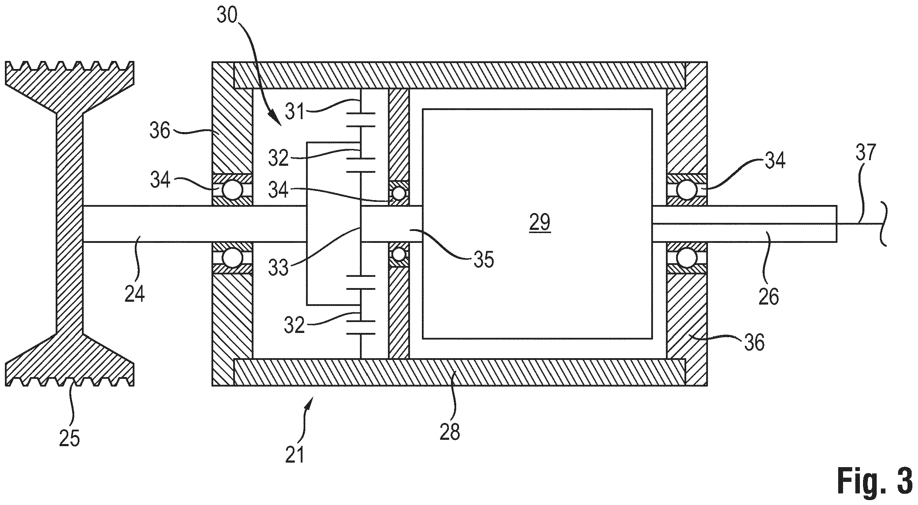

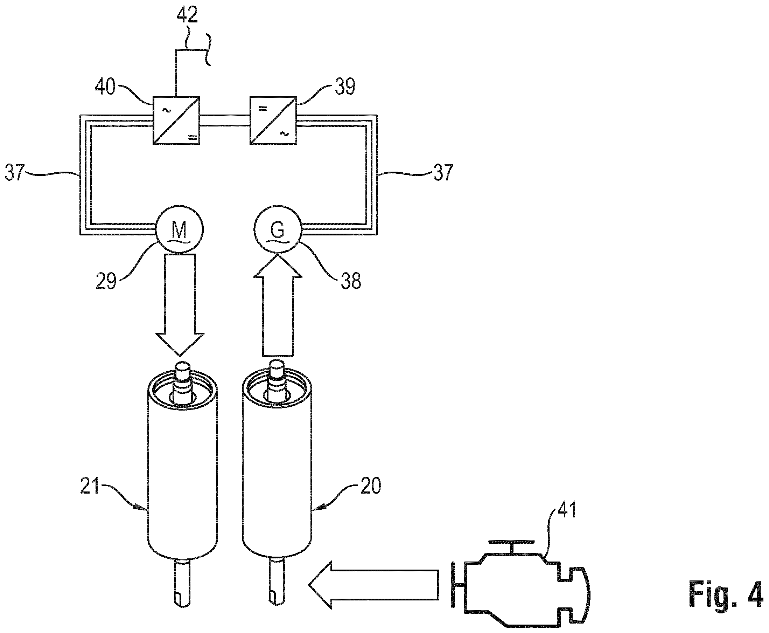

Fig. 3 zeigt eine schematische Längsschnittansicht der zweiten Walze 21. Die hohlzylindrische Walze 21 umfasst einen Walzenmantel 28, der stirnseitig durch Abdichtelemente 36 verschlossen ist. Der Walzenmantel 28 mit seinen Abdichtelementen 36 ist mittels Lagern 34 auf der drehbaren Welle 24, welche die Riemenscheibe 25 trägt, sowie einer stillstehenden, als Hohlwelle ausgeführten Welle 26 drehbar gelagert. Die stillstehende Welle 26 trägt einen Elektromotor 29 mit einer als Rotor des Elektromotors 29 ausgeführten Abtriebswelle 35. Die Abtriebswelle 35 trägt ein Sonnenrad 33, welches Teil eines Planetengetriebes 30 ist, das im Inneren der zweiten Walze 21 angeordnet ist. Ein Planetenträger 32 ist auf der drehbaren Welle 24 angeordnet Auf dem Planetenträger 32 angeordnete Zahnräder kämmen mit dem Sonnenrad 33. An der Innenseite des Walzenmantels 28 ist ein Hohlrad 31 angeordnet, mit welchem die Zahnräder des Planetenträgers 32 kämmen. Der Elektromotor 29 ist durch eine Zuleitung 37, die durch die als Hohlwelle ausgeführte Welle 26 hindurchgeführt ist, mit einem Generator 38 (vergleiche Fig. 4) verbunden, der den Elektromotor 29 speist.

Fig. 4 zeigt eine schematisierte Darstellung Ansicht einer Anordnung zum Antrieb der der Konditioniereinrichtung 11, wobei der als Symbol dargestellte Elektromotor 29 aus Gründen der Vereinfachung außerhalb der zweiten Walze 21 angeordnet dargestellt ist.
Der Verbrennungsmotor 41 treibt über eine nicht näher dargestellte Antriebsverbindung unter anderem die erste Walze 20 mit einer konstanten Drehzahl an. Der Generator 38 wird gemäß der Darstellung in Fig.4 von der ersten Walze 20 angetrieben. Hierzu kann der Generator 38 im Inneren der ersten Walze 20 verbaut sein. Der Generator 38 kann auch an die Welle 27 der ersten Walze 20 angeflanscht sein. Grundsätzlich kann der Generator 38 auch an einer beliebigen Stelle im Antriebstrang des Feldhäckslers 1 angeordnet sein. Der Antrieb des Generators 38 erfolgt dabei durch einen Riementrieb, der mit dem Verbrennungsmotor 41 antriebsmäßig verbunden ist. Die erste Walze 20 wird, wie bereits beschrieben, durch den die Riemenscheibe 23 umschlingenden Riemen angetrieben. Die Welle 22 treibt den Generator 38 im Inneren der ersten Walze 20 an. Ein von dem Generator 38 erzeugter Strom wird einem Gleichrichter 39 zugeführt. Diesem Nachgeordnet ist ein Wechselrichter 40, der die Einstellung einer variablen Spannung beziehungsweise Frequenz ermöglicht, so dass der Elektromotor 29 variabel ansteuerbar ist.

Der Planetenträger 32 wird von der Welle 24 der zweiten Walze 21 mit einer konstanten Drehzahl angetrieben, die jedoch aus dem resultierenden Übersetzungsverhältnis der unterschiedlichen Durchmesser der Riemenscheiben 23 und 25 geringer ist, als die Drehzahl, mit der die Welle 22 der ersten Walze 20 angetrieben wird. Der zuschaltbare Elektromotor 29 treibt das Sonnenrad 33 an, so dass die von der Welle 24 abgegebene Drehzahl mit der von dem Elektromotor 29 an das Sonnenrad 33 abgegebenen Drehzahl überlagerbar ist. Der Elektromotor 29 erlaubt dabei eine variable Antriebsdrehzahl des Sonnenrades 33. Hierdurch lässt sich die Differenzdrehzahl der ersten Walze 20 und der zweiten Walze 21 in einfacher Weise verändern. Durch die Ansteuerung des Elektromotors 29 durch den Wechselrichter 40 lässt sich die Drehzahldifferenz stufenlos verändern. Zudem lässt sich die Drehzahländerung durch die Verwendung eines leistungsverzweigten Getriebes während des laufenden Betriebes durchführen.

Die Ansteuerung des Wechselrichters 40 erfolgt mittels einer Steuereinrichtung 43 des Feldhäckslers 1, welche vorzugsweise in der Kabine 7 angeordnet ist. Hierbei kann die Steuereinrichtung 43 in Abhängigkeit von zumindest einem Erntegutparameter den Wechselrichter 40 steuern oder regeln, um ein optimales Ergebnis bei der Gutaufbereitung durch die Konditioniereinrichtung 11 zu erzielen. Der Wechselrichter 40 steht über eine Signalleitung 42 mit der Steuereinrichtung 43 in Wirkverbindung, um diesen ansteuern zu können.

Eine alternative Ausführungsform ist der Einsatz eines hydrostatischen Antriebes anstelle des Elektromotors, um die Antriebsdrehzahl der zweiten Walze 21 zu überlagern. Ein als Hydromotor ausgeführt hydrostatischer Antrieb erlaubt gleichfalls die stufenlose Anpassung der Differenzdrehzahl zwischen der ersten Walze 20 und der zweiten Walze 21. Der Hydromotor kann in die zweite Walze 21 integriert sein, um Bauraum einzusparen. Der Hydromotor ist entsprechend der Anordnung des Elektromotors 29 in der zweiten Walze 21 mit dem Sonnenrad 33 des Planetengetriebes 30 verbunden. Die Zuleitung von Hydrauliköl für den Antrieb des Hydromotors erfolgt vorzugsweise durch die als Hohlwelle ausgeführte Welle 26 an der zweiten Walzen21. Die Bereitstellung des Hydrauliköls erfolgt durch den Hydraulikkreislauf des Feldhäckslers, an den der Hydromotor anschließbar ist.

**Bezugszeichenliste**

| | | | |
|---|---|---|---|
| **1** | Feldhäcksler | **31** | Hohlrad |
| **2** | Maschinenrahmen | **32** | Planetenträger |
| **3** | Räder | **33** | Sonnenrad |
| **4** | Räder | **34** | Lager |
| **5** | Vorderachse | **35** | Abtriebswelle |
| **6** | Hinterachse | **36** | Abdichtelement |
| **7** | Fahrerkabine | **37** | Zuleitung |
| **8** | Erntevorsatzgerät | **38** | Generator |
| **9** | Einzugsorgan | **39** | Gleichrichter |
| **10** | Häckseltrommel | **40** | Wechselrichter |
| **11** | Konditioniereinrichtung | **41** | Verbrennungsmotor |
| **12** | Förderschacht | **42** | Signalleitung |
| **13** | Nachbeschleuniger | **43** | Steuereinrichtung |
| **14** | Auswurfkrümmer | | |
| **15** | Vertikale Achse | | |
| **16** | Horizontale Achse | | |
| **17** | Befestigungssockel | | |
| **18** | Hydraulikzylinder | | |
| **19** | Auswurfklappe | | |
| **20** | Erste Walze | | |
| **21** | Zweite Walze | | |
| **22** | Welle | | |
| **23** | Riemenscheibe | | |
| **24** | Welle | | |
| **25** | Riemenscheibe | | |
| **26** | Welle | | |
| **27** | Welle | | |
| **28** | Walzenmantel | | |
| **29** | Elektromotor | | |
| **30** | Planetengetriebe | | |

## Patentansprüche

1. Selbstfahrender Feldhäcksler (1) mit einer Konditioniereinrichtung (11), die eine von einem Riementrieb angetriebene erste Walze (20), die durch den Riementrieb trieblich mit einer zweiten Walze (21) verbunden ist, welche mit unterschiedlichen Antriebsdrehzahlen antreibbar sind, aufweist, **dadurch gekennzeichnet, dass** zur Änderung einer Differenzdrehzahl zwischen der ersten Walze (20) und der zweiten Walze (21) die Antriebsdrehzahl der zweiten Walze (21) durch einen mit der zweiten Walze (21) trieblich verbundenen zusätzlichen Antrieb (29) überlagerbar ist.

2. Selbstfahrender Feldhäcksler (1) nach Anspruch 1, **dadurch gekennzeichnet, dass** der Antrieb als hydrostatischer Antrieb ausgebildet ist.

3. Selbstfahrender Feldhäcksler (1) nach Anspruch 1, **dadurch gekennzeichnet, dass** der Antrieb als Elektronmotor ausgebildet ist, der von einer als Generator arbeitenden, an dem Feldhäcksler (1) angeordneten elektrischen Maschine (38) speisbar ist.

4. Selbstfahrender Feldhäcksler (1) nach Anspruch 3, **dadurch gekennzeichnet, dass** der Elektromotor (29) im Inneren der zweiten Walze (21) angeordnet ist.

5. Selbstfahrender Feldhäcksler (1) nach einem der Ansprüche 3 oder 4, **dadurch gekennzeichnet, dass** die elektrische Maschine (38) im Inneren der ersten Walze (20) angeordnet ist.

6. Selbstfahrender Feldhäcksler (1) nach einem der Ansprüche 3 oder 4, **dadurch gekennzeichnet, dass** die elektrische Maschine (38) im Antriebsstrang des Feldhäckslers (1) angeordnet ist.

7. Selbstfahrender Feldhäcksler (1) nach einem der Ansprüche 3 bis 6, **dadurch gekennzeichnet, dass** ein Wechselrichter (40) zur Ansteuerung des Elektromotors (29) vorgesehen ist.

8. Selbstfahrender Feldhäcksler (1) nach einem der vorherigen Ansprüche, **dadurch gekennzeichnet, dass** die Anpassung der Differenzdrehzahl zwischen der ersten Walze (20) und der zweiten Walze (21) stufenlos, entweder mittels eines als Hydromotor ausgeführten hydrostatischen Antriebs oder mittels des durch den Wechselrichter (40) angesteuerten Elektromotors (29), erfolgt.

9. Selbstfahrender Feldhäcksler (1) nach einem der Ansprüche 3 bis 8, **dadurch gekennzeichnet, dass** der Elektromotor (29) durch ein leistungsverzweigtes Getriebe (30) mit einer trieblichen Anbindung (24) der zweiten Walze (21) verbunden ist.

10. Selbstfahrender Feldhäcksler (1) nach Anspruch 9, **dadurch gekennzeichnet, dass** die triebliche Anbindung der zweiten Walze (21) eine auf einer drehbar in der zweiten Walze (21) gelagerten Welle (24) angeordnete Riemenscheibe (25) umfasst.

11. Selbstfahrender Feldhäcksler (1) nach einem der Ansprüche 9 oder 10, **dadurch gekennzeichnet, dass** das leistungsverzweigte Getriebe als Planetengetriebe (30) ausgeführt ist, welches im Inneren der zweiten Walze (21) angeordnet ist.

12. Selbstfahrender Feldhäcksler (1) nach Anspruch 11, **dadurch gekennzeichnet, dass** das Planetengetriebe (30) ein Hohlrad (31) umfasst, welches Teil eines Walzenmantels (28) der zweiten Walze (21) ist.

13. Selbstfahrender Feldhäcksler (1) nach einem der Ansprüche 11 oder 12, **dadurch gekennzeichnet, dass** das Planetengetriebe (30) einen Planetenträger (32) umfasst, der auf einer von dem Riementrieb angetriebenen Welle (24) der zweiten Walze (21) angeordnet ist.

14. Selbstfahrender Feldhäcksler (1) nach einem der Ansprüche 11 bis 13, **dadurch gekennzeichnet, dass** das Planetengetriebe (30) ein Sonnenrad (33) umfasst, welches auf einer Abtriebswelle (35) des Elektromotors (29) angeordnet ist.

15. Selbstfahrender Feldhäcksler (1) nach einem der Ansprüche 7 bis 14, **dadurch gekennzeichnet, dass** eine Steuerungseinrichtung (43) am Feldhäcksler (1) angeordnet ist, mittels der der Wechselrichter (40) ansteuerbar ist.

16. Selbstfahrender Feldhäcksler nach Anspruch 15, **dadurch gekennzeichnet, dass** der Wechselrichter (40) in Abhängigkeit von zumindest einem Erntegutparameter ansteuerbar ist.

## Claims

1. A self-propelled forage harvester (1) comprising a conditioning device (11) having a first roller (20) which is driven by a belt drive and which is drivingly connected by the belt drive to a second roller (21), which are drivable at different driving rotary speeds, **characterised in that** to modify the differential rotary speed between the first roller (20) and the second roller (21) the driving rotary speed of the second roller (21) can be superposed by an additional drive (29) drivingly connected to the second roller (21).

2. A self-propelled forage harvester (1) according to claim 1 **characterised in that** the drive is in the form of a hydrostatic drive.

3. A self-propelled forage harvester (1) according to claim 1 **characterised in that** the drive is in the form of an electric motor which can be fed by an electrical machine (38) which operates as a generator and which is arranged on the forage harvester (1).

4. A self-propelled forage harvester (1) according to claim 3
**characterised in that** the electric motor (29) is arranged in the interior of the second roller (21).

5. A self-propelled forage harvester (1) according to one of claims 3
and 4 **characterised in that** the electrical machine is arranged in the interior of the first roller (20).

6. A self-propelled forage harvester (1) according to one of claims 3
and 4 **characterised in that** the electrical machine (38) is arranged in the drive train of the forage harvester (1).

7. A self-propelled forage harvester (1) according to one of claims 3 to 6 **characterised in that** there is provided an inverter (40) for actuation of the electric motor (29).

8. A self-propelled forage harvester (1) according to one of the preceding claims **characterised in that** adaptation of the differential rotary speed between the first roller (20) and the second roller (21) is effected steplessly either by means of a hydrostatic drive in the form of a hydraulic motor or by means of the electric motor (29) which is actuated by the inverter (40).

9. A self-propelled forage harvester (1) according to one of claims 3 to 8 **characterised in that** the electric motor (29) is connected to a driving connection (24) of the second roller (21) by a power-split transmission (30).

10. A self-propelled forage harvester (1) according to claim 9
**characterised in that** the driving connection of the second roller (21) includes a belt pulley (25) arranged on a shaft (24) mounted rotatably in the second roller (21).

11. A self-propelled forage harvester (1) according to one of claims 9
and 10 **characterised in that** the power-split transmission is in the form of a planetary transmission (30) arranged in the interior of the second roller (21).

12. A self-propelled forage harvester (1) according to claim 11
**characterised in that** the planetary transmission (30) includes a ring gear (31) which is part of a peripheral roller casing (28) of the second roller (21).

13. A self-propelled forage harvester (1) according to one of claims 11 and 12 **characterised in that** the planetary transmission (30) includes a planetary carrier (32) arranged on a shaft (24) of the second roller (21), that is driven by the belt drive.

14. A self-propelled forage harvester (1) according to one of claims 11 to 13 **characterised in that** the planetary transmission (30) includes a sun gear (33) arranged on an output shaft (35) of the electric motor (29).

15. A self-propelled forage harvester (1) according to one of claims 7
to 14 **characterised in that** a control device (43) by means of which the inverter (40) is controllable is arranged on the forage harvester (1).

16. A self-propelled forage harvester according to claim 15
**characterised in that** the inverter (40) is actuable in dependence on at least one crop material parameter.

## Revendications

1. Ensileuse automotrice (1) comprenant un dispositif de conditionnement (11) qui comporte un premier rouleau (20) entraîné par une commande à courroie et relié en entraînement par la commande à courroie à un deuxième rouleau (21), lequel peut être entraîné à différentes vitesses de rotation d'entraînement, **caractérisée en ce que**, pour modifier une vitesse de rotation différentielle entre le premier rouleau (20) et le deuxième rouleau (21), la vitesse de rotation d'entraînement du deuxième rouleau (21) peut être combinée à celle d'un entraînement supplémentaire (29) relié en entraînement au deuxième rouleau (21).

2. Ensileuse automotrice (1) selon la revendication 1, **caractérisée en ce que** l'entraînement est conçu sous la forme d'un entraînement hydrostatique.

3. Ensileuse automotrice (1) selon la revendication 1, **caractérisée en ce que** l'entraînement est conçu sous la forme d'un moteur électrique qui peut être alimenté par une machine électrique (38) fonctionnant comme générateur, disposée sur l'ensileuse (1).

4. Ensileuse automotrice (1) selon la revendication 3, **caractérisée en ce que** le moteur électrique (29) est disposé à l'intérieur du deuxième rouleau (21).

5. Ensileuse automotrice (1) selon l'une des revendications 3 ou 4, **caractérisée en ce que** la machine électrique (38) est disposée à l'intérieur du premier rouleau (20).

6. Ensileuse automotrice (1) selon l'une des revendications 3 ou 4, **caractérisée en ce que** la machine électrique (38) est disposée dans la chaîne cinématique de l'ensileuse (1).

7. Ensileuse automotrice (1) selon l'une des revendications 3 à 6, **caractérisée en ce qu'**un onduleur (40) est prévu pour la commande du moteur électrique (29).

8. Ensileuse automotrice (1) selon l'une des revendications précédentes, **caractérisée en ce que** l'adaptation de la vitesse de rotation différentielle entre le premier rouleau (20) et le deuxième rouleau (21) est effectuée en continu, soit au moyen d'un entraînement hydrostatique conçu sous la forme d'un moteur hydraulique, soit au moyen du moteur électrique (29) commandé par l'onduleur (40).

9. Ensileuse automotrice (1) selon l'une des revendications 3 à 8, **caractérisée en ce que** le moteur électrique (29) est relié à une liaison d'entraînement (24) du deuxième rouleau (21) par une transmission à variation continue (30).

10. Ensileuse automotrice (1) selon la revendication 9, **caractérisée en ce que** la liaison d'entraînement du deuxième rouleau (21) comprend une poulie à courroie (25) disposée sur un arbre (24) monté à rotation dans le deuxième rouleau (21).

11. Ensileuse automotrice (1) selon l'une des revendications 9 ou 10, **caractérisée en ce que** la transmission à variation continue est conçue sous la forme d'un engrenage planétaire (30) qui est disposé à l'intérieur du deuxième rouleau (21).

12. Ensileuse automotrice (1) selon la revendication 11, **caractérisée en ce que** l'engrenage planétaire (30) comprend une couronne (31) qui fait partie d'une enveloppe de rouleau (28) du deuxième rouleau (21).

13. Ensileuse automotrice (1) selon l'une des revendications 11 ou 12, **caractérisée en ce que** l'engrenage planétaire (30) comprend un porte-satellites (32) qui est disposé sur un arbre (24), entraîné par la commande à courroie, du deuxième rouleau (21).

14. Ensileuse automotrice (1) selon l'une des revendications 11 à 13, **caractérisée en ce que** l'engrenage planétaire (30) comprend une roue solaire (33) qui est disposée sur un arbre de sortie (35) du moteur électrique (29).

15. Ensileuse automotrice (1) selon l'une des revendications 7 à 14, **caractérisée en ce que** sur l'ensileuse (1) est disposé un dispositif de commande (43) permettant de commander l'onduleur (40).

16. Ensileuse automotrice selon la revendication 15,
**caractérisée en ce que** l'onduleur (40) peut être commandé en fonction d'au moins un paramètre du produit de récolte.
